# EUROPÄISCHE PATENTSCHRIFT

(11) **EP 1 910 113 B1**
(45) Veröffentlichungstag und Bekanntmachung des Hinweises auf die Patenterteilung: **21.09.2011**
(21) Anmeldenummer: 06761788.6
(22) Anmeldetag: 12.07.2006
(51) Int. Cl.: B60J 7/12, B60J 7/14, B60J 7/043

(54) **CABRIOLET-FAHRZEUG MIT EINEM ZUMINDEST BEREICHSWEISE MIT EINEM BEZUG VERSEHENEN DACH**
CABRIOLET HAVING A ROOF WHICH IS PROVIDED, AT LEAST IN SECTIONS, WITH A COVER
VEHICULE CABRIOLET POURVU D'UN TOIT PRESENTANT AU MOINS PARTIELLEMENT UN REVETEMENT

(30) Priorität: 21.07.2005 DE 102005034736; 09.09.2005 DE 102005042982
(43) Veröffentlichungstag der Anmeldung: 16.04.2008
(73) Patentinhaber: Wilhelm Karmann GmbH, 49084 Osnabrück (DE)
(72) Erfinder: HESELHAUS, Udo, 49479 Ibbenbüren (DE)
(74) Vertreter: Kronthaler, Schmidt & Coll.
(86) Internationale Anmeldenummer: PCT/DE2006/001202
(87) Internationale Veröffentlichungsnummer: WO 2007/009432

(56) Entgegenhaltungen:
- EP-A- 1 151 884
- EP-A2- 1 125 778
- US-A- 4 063 774

## Beschreibung

Die Erfindung betrifft ein Cabriolet-Fahrzeug mit einem zumindest im vorderen Teil mit einem Bezug versehenen beweglichen Dach und mit einem darin eingefassten Sonnendachteil nach dem Oberbegriff des Anspruchs 1.

Es ist bekannt, in einem sog. Softtop, also einem mit einem flexiblen Bezug versehenen Dach, ein bei ansonsten geschlossenem Dach aufstellbares Sonnendachteil anzuordnen. Ein solches Sonnendachteil muss jedoch mit seiner gesamten Erstreckung innerhalb eines Dachbereichs liegen, der beim Öffnen des Daches und Einfalten des Bezugs keine Einknickkante umfasst. Die für das Sonnendachteil zur Verfügung stehende Fläche ist daher gering. EP 1125 778 A2 bescheibt ein Öffnungs Rühiges Fahrzeugdach mit einzelnen lamdienartigen Deckelteilen, also ohne Dach bezug.

Der Erfindung liegt das Problem zugrunde, die vom Sonnendachteil übergriffene Fläche zu vergrößern.

Die Erfindung löst dieses Problem durch ein Cabriolet-Fahrzeug mit den Merkmalen des Anspruchs 1. Vorteilhafte Ausgestaltungen des Gegenstandes der Erfindung ergeben sich aus den weiteren Ansprüchen 2 bis 12.

Mit der erfindungsgemäßen Lösung kann das Sonnendachteil bis weit nach vorne reichen, so dass dessen Fläche vergrößert ist.

Insbesondere kann das Sonnendachteil mit seiner vorderen, quer zum Fahrzeug gelegenen Kante einen Teil der Vorderkante des bewegten Daches bilden und somit seine Erstrekkungsfläche nach vorne hin weitestmöglich ausdehnen. Dennoch kann für eine optimierte Dachstabilität der Vorderkantenbereich von einem abgesenkten Querträger des ihn tragenden Rahmenteils, der für eine einfache Herstellung vorzugsweise einstückig ist, untergriffen sein. Dadurch, dass der Querträger abgesenkt ist, bleibt dennoch auch in diesem Bereich ein großer Lichteinfall erhalten. Zudem ergibt sich von außen eine durchgehende Optik, da der Querträger komplett von dem Sonnendachteil übergriffen sein kann.

Insbesondere ist die Sonnendachfläche maximiert, wenn dieses bei geschlossenem Dach unmittelbar an die Windschutzscheibe anschließt, diese also zumindest von außen von keinem oberen Querrahmenteil begrenzt ist. Die Windschutzscheibe geht dann optisch einheitlich in das Sonnendachteil über.

Für eine gute optische Integration in das bezogene Dach können seitliche, mit Bezug versehene Längseinfassungen der Ausnehmung bis zur vorderen Dachkante reichen, wobei zur Abdichtung die untergreifenden hinteren und seitlichen Abschnitte des untergreifenden Rahmens als Wasserkanäle ausgebildet sein können.

Zur optimierten Abschattung kann neben einer ggf. lichtsensitiven Glastönung auch dem Sonnendachteil ein Rollo oder ähnliche Abschattungseinheit zugeordnet sein, das auch automatisch bei Dachöffnung schließbar sein kann, um somit bei einem geöffneten Dach, bei dem das vordere Dachende ungewendet in Originalorientierung verbleibt, einen Durchblick auf darunter gelegene Dachteile zu verhindern.

Für eine gute Bruchfestigkeit bei geringem Gewicht kann das Sonnendachteil günstig aus Polycarbonat bestehen. Weitere Vorteile und Merkmale der Erfindung ergeben sich aus einem in der Zeichnung dargestellten und nachfolgend erläuterten Ausführungsbeispiel des Gegenstandes der Erfindung.

In der Zeichnung zeigt:

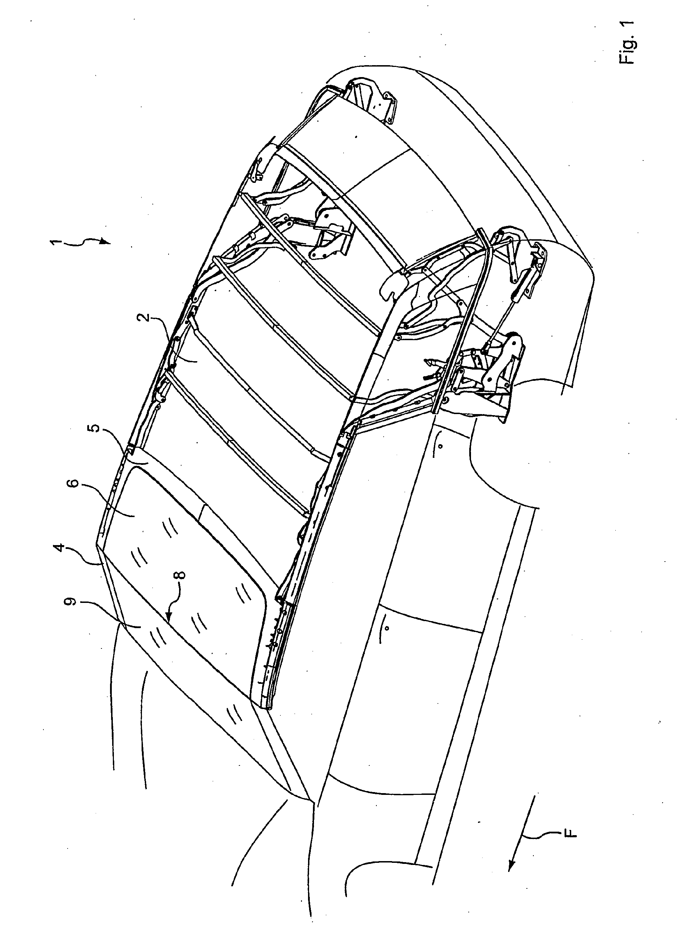

- Fig. 1: eine perspektivische und teilweise abgebrochene Ansicht von schräg hinten eines erfindungs- gemäßen Cabriolet-Fahrzeugs bei geschlossenem Dach ohne eingezeichneten Dachbezug,
- Fig. 2: das herausgezeichnete Dach mit Windschutzscheibe und Rahmen nach Fig. 1, hier mit einem Dachbezug versehen,

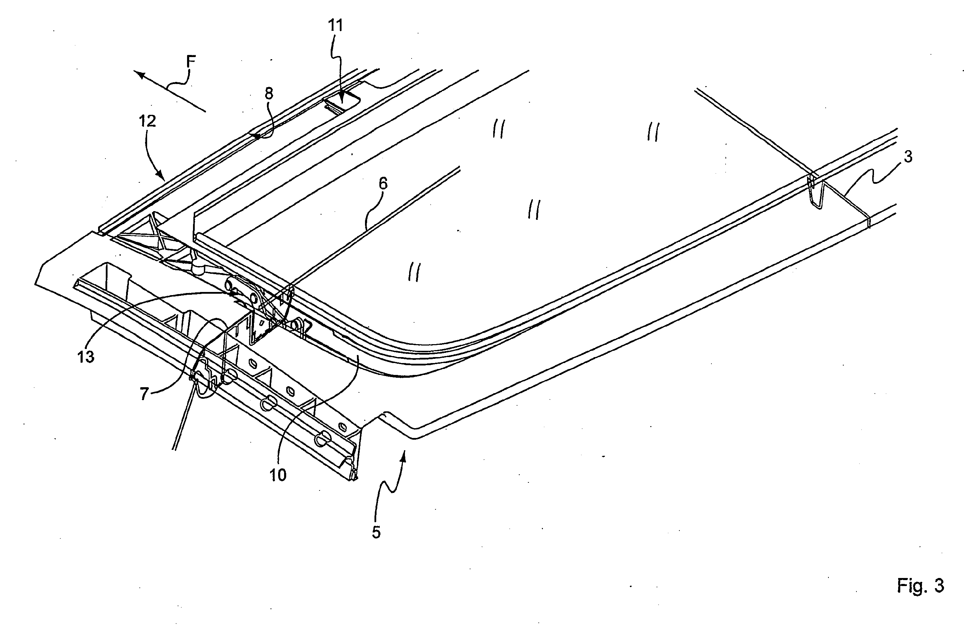

- Fig. 3: eine Detailansicht des in Fahrtrichtung linken Bereichs des Sonnendachteils in seinem Rahmen mit zusätzlich eingezeichnetem Längs- und Quer- schnitt und Details des Rahmens,
- Fig. 4: den in Fig. 3 quer zum Fahrzeug gelegten Schnitt in vergrößerter Ansicht,
- Fig. 5: die in Fig. 3 längs zum Fahrzeug in dessen Quer- mitte gelegten Schnitt in vergrößerter Ansicht,
- Fig. 6: das Sonnendachteil nach Fig. 3 mit umgebendem Bezug in leicht aufgestellter Lage,

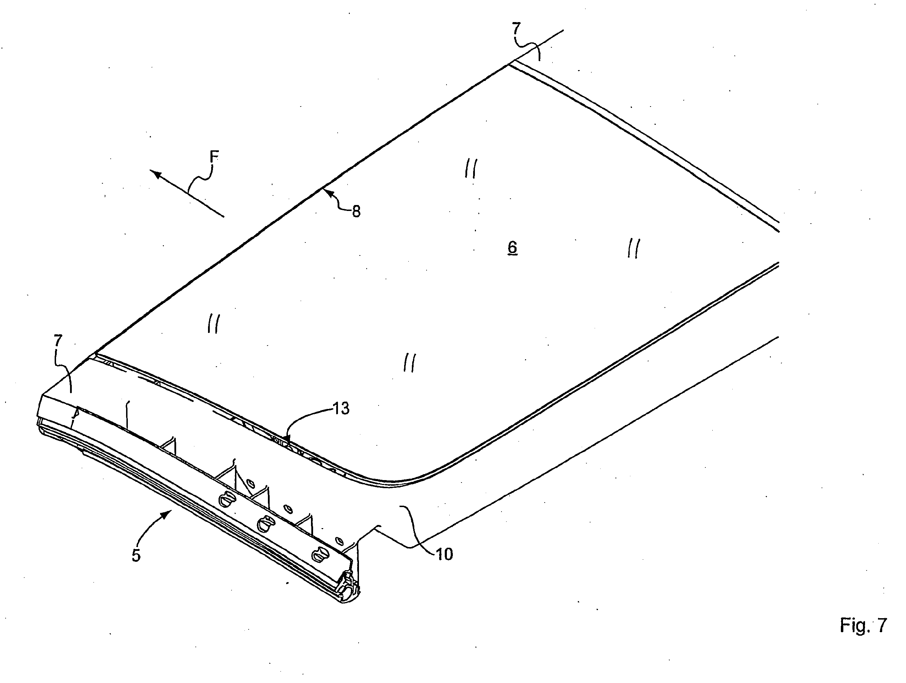

- Fig. 7: das Sonnendachteil nach Fig. 6 mit umgebendem Bezug in geschlossener Lage,

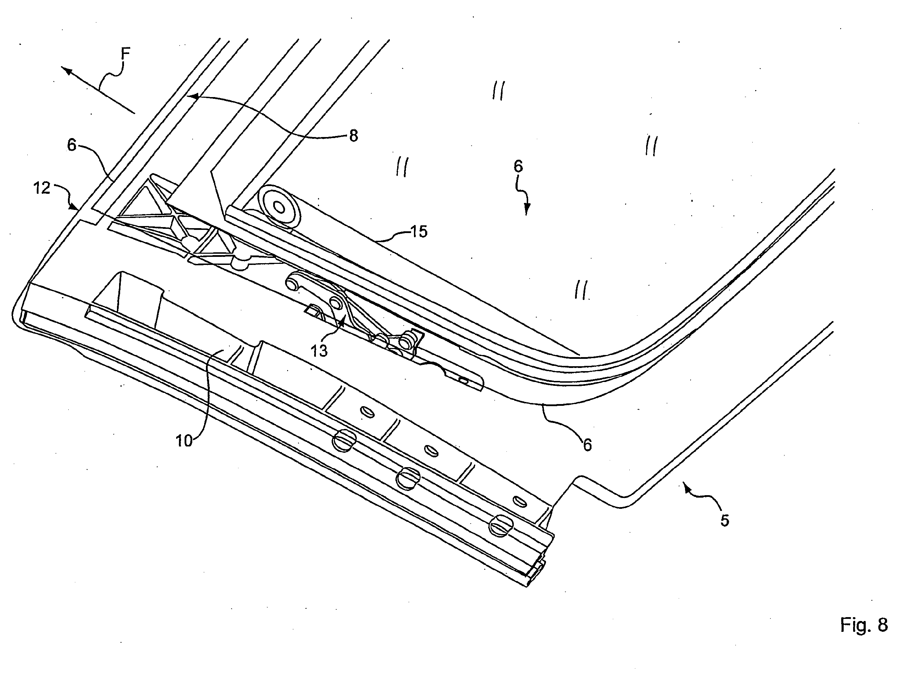

- Fig. 8: eine ähnliche Ansicht wie Fig. 3 mit zusätzlich eingezeichnetem Rollo, das unter dem Sonnen- dachteil geschlossen ist,

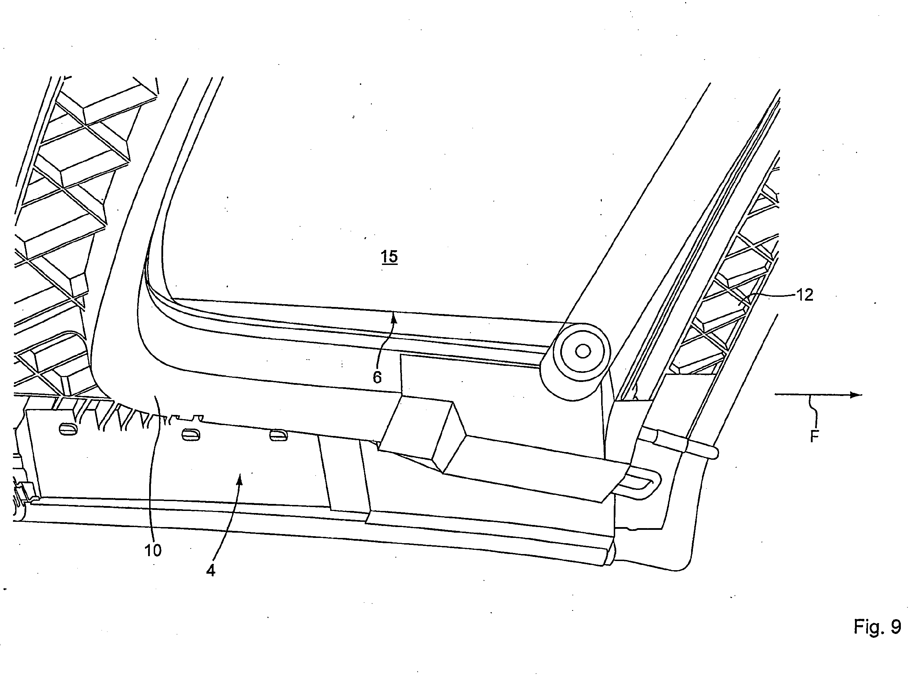

- Fig. 9: eine Ansicht des linken Bereichs des Sonnen- dachteils von schräg innen bei geschlossenem Rollo,
- Fig. 10: eine perspektivische Ansicht des Fahrzeugheck- bereichs von schräg oben bei geöffnetem Dach.

Das in der Zeichnungsfigur 1 nur schematisch dargestellte Cabriolet-Fahrzeug 1 umfasst ein bewegliches Dach 2, das in seinem geöffneten Zustand im heckwärtigen Karosseriebereich ablegbar ist. Das Dach 2 kann unterschiedlich ausgebildet sein und auch teilweise starre Dachteile umfassen. In jedem Fall ist ein vorderer, in geschlossener Stellung einem Windschutzscheibenrahmen 4 mit einer von diesem gehaltenen Windschutzscheibe 9 zugewandter Bereich mit einem Bezug 3 versehen, der dort zumindest teilweise von einer starren, den Bezug 3 untergreifende Baueinheit 5 abgestützt ist, wobei die Baueinheit 5 ein Rahmenteil für ein aus der Ebene des Dachbezugs 3 aufstellbares Sonnendachteil 6 ausbildet.

Das in der Zeichnung dargestellte Dach 2 hat eine relativ lange Ausbildung, was nicht zwingend ist, und ist zum Beispiel auch geeignet, den Innenraum eines Kombi-, Van- oder Geländefahrzeugs mit zwei oder mehr Sitzreihen hintereinander bis über einen Kofferraum hin zum Steilheckabschluss des Fahrzeugs zu überdecken.

Um die Einbettung des Sonnendachteils 6 in die Außenfläche des Dachbezugs 3 zu ermöglichen, ist in diesem eine U-förmige, in Fahrtrichtung F nach vorne offene Ausnehmung ausgebildet. Der Bezug 3 bildet daher hier nur neben dem Sonnendachteil 6 zwei seitliche, schmale Längsschenkel 7 ohne vordere Querverbindung aus. Diese mit dem Bezug 3 versehenen Längseinfassungen 7 der Ausnehmung reichen bis zur vorderen Dachkante. Der Bezug 3 ist in den Längsbereichen 7 nahezu vollflächig untergriffen, so dass er dort nicht frei beweglich gespannt ist.

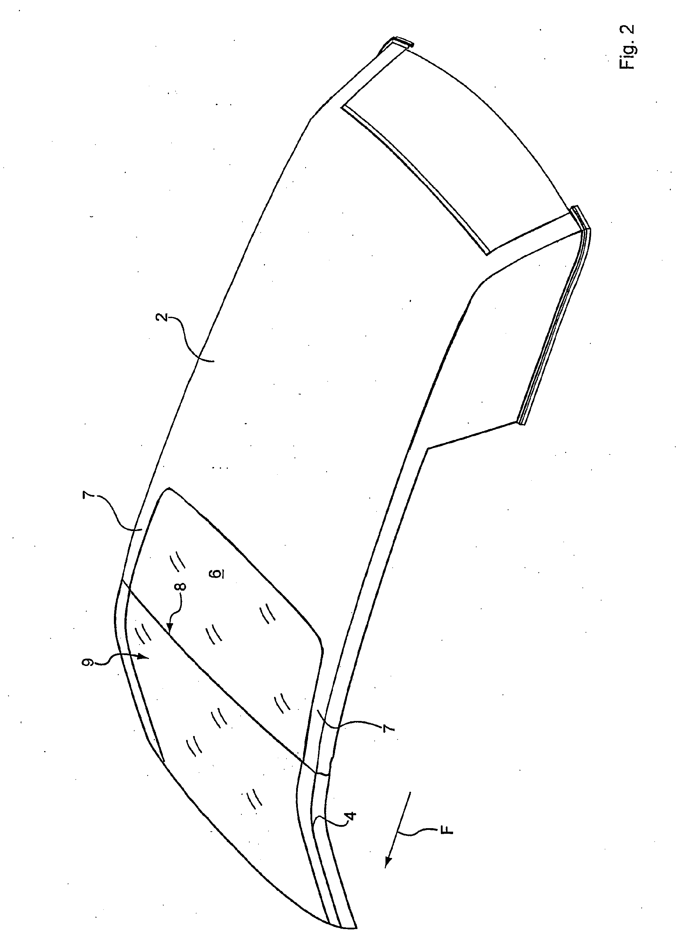

Im bezüglich der Fahrzeugquererstreckung mittleren Teil bildet das Sonnendachteil 6 selbst mit seiner Vorderkante 8 die äußere vordere Dachkante aus. Das Sonnendachteil 6 kann somit bei geschlossenem Dach 2 unmittelbar an die Windschutzscheibe 9 anschließen, wodurch sich, wie in Fig. 2 angedeutet ist, ein einheitliches Erscheinungsbild von Sonnendachteil 6 und Windschutzscheibe 9 ergibt, die nahezu als durchgehende Fläche erscheinen. Dabei sind vorzugsweise auch die Breitenerstreckungen gleich, so dass sich an den Seiten keine Abstufung ergibt. Die bezogenen Längsschenkel 7 sind daher entsprechend schmal ausgebildet. Auch der Windschutzscheibenrahmen 4 muss an seinem oberen Rand keinen - oder keinen von außen sichtbaren - Querrahmenteil aufweisen. Die Windschutzscheibe 9 scheint dann in dem beweglichen Sonnendachteil 6 optisch fortgesetzt.

Die das Sonnendachteil 6 tragende Baueinheit 5 kann herstellungstechnisch einfach einstückig und zum Beispiel als Leichtmetallgussteil ausgebildet sein. Sie umfasst einen das Sonnendachteil 6 seitlich und hinten untergreifenden, entsprechend der Kontur der Ausnehmung U-förmigen und hier mit einem Wasserkanal versehenen Rahmenteil 10. Dieser Rahmenteil 10 kann, wie hier dargestellt, zudem zur Steigerung der Stabilität und um eine Abstützfläche für vordere (Schwenk-) Halterungen 11 des Sonnendachteils 6 bereitzustellen, über einen gegenüber den seitlichen und hinteren Abschnitten abgesenkten vorderen Querträger 12 zu einer geschlossenen Kontur verbunden sein. Dieser vordere Querträger 12 kann aufgrund seiner Absenkung von dem Sonnendachteil 6 übergriffen sein und ist bei zum Beispiel intensiver Glas- oder Kunststofftönung des Sonnendachteils 6 von außen nicht sichtbar.

Vordere Halterungen 11 für das Sonnendachteil können unter Umständen auch entbehrlich sein, sofern die seitlichen Aufstellmechanismen entsprechend stabil, insbesondere im vorderen Bereich, ausgebildet oder im Seitenbereich zusätzliche Halterungen vorgesehen sind.

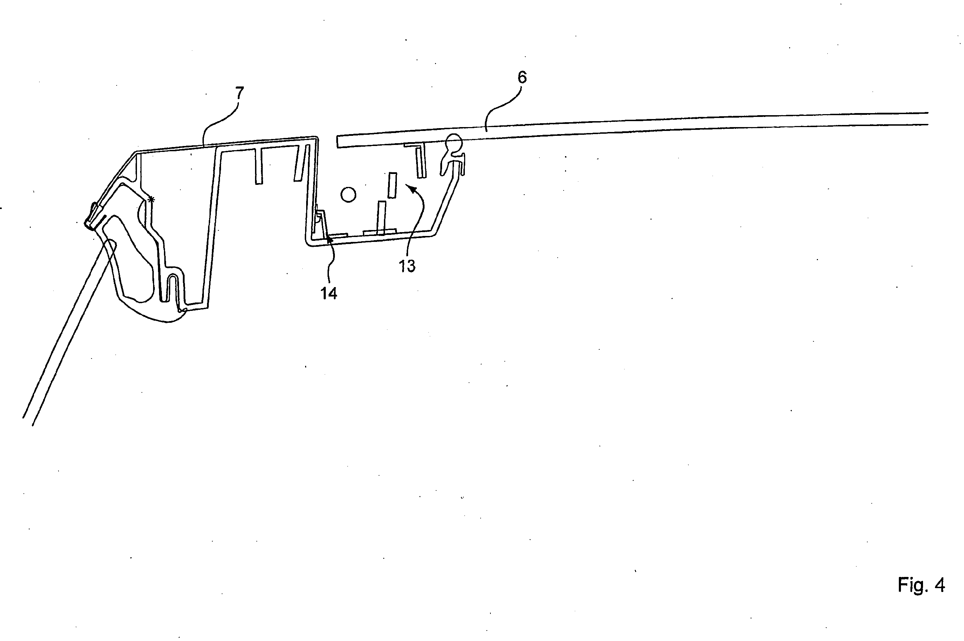

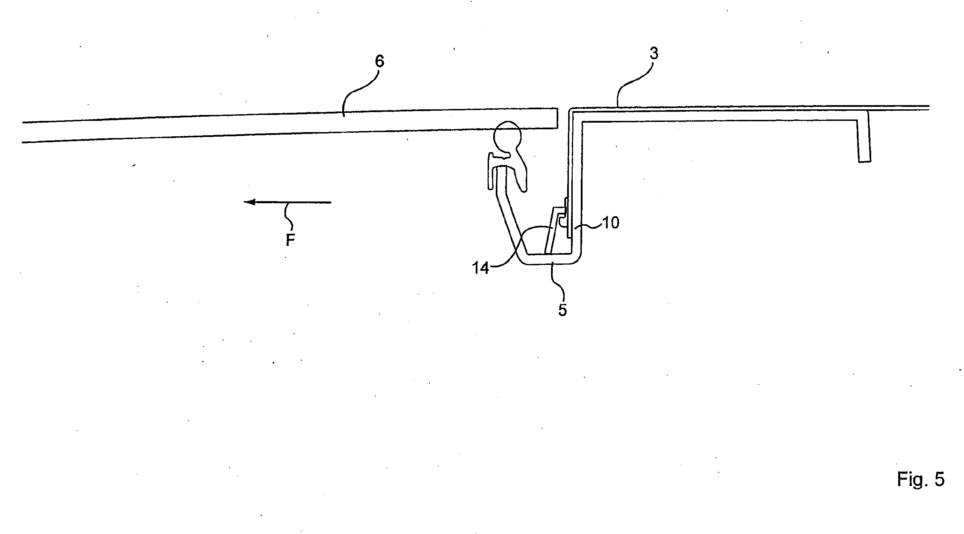

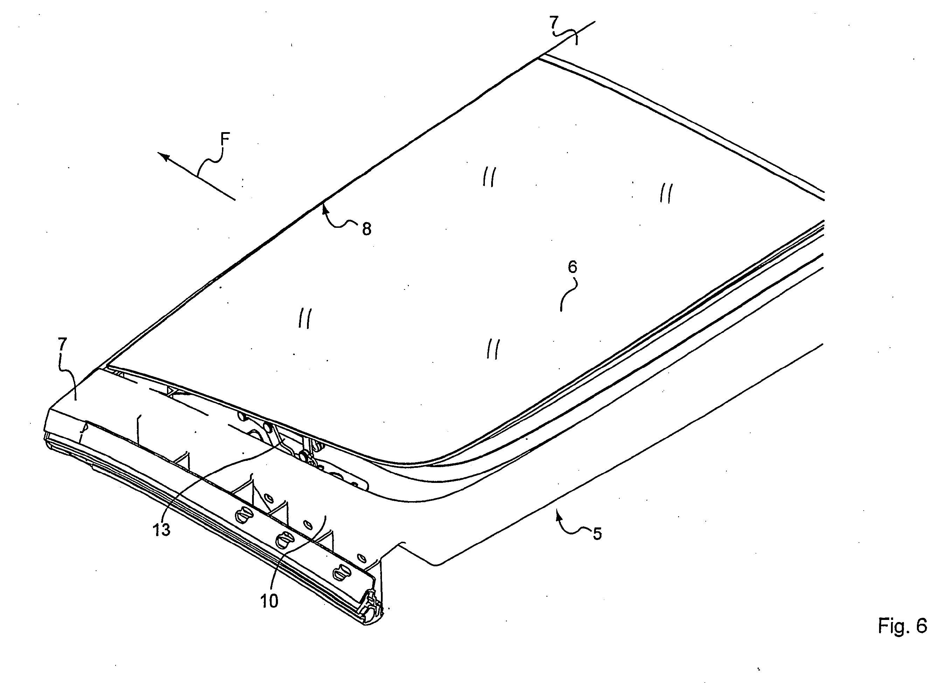

In den seitlichen Abschnitten des Rahmenteils 10 sind jeweils Aufstellmechanismen für das Sonnendachteil 6 angeordnet, so dass dieses mit seiner hinteren Kante aufwärts bewegbar ist (Fig. 6). Des weiteren greift auch der Bezug 3 tief in diese Kanäle ein. Wie im Schnitt durch den seitlichen Abschnitt 7 des Bezugs 3 sichtbar ist (Fig. 4), ist dieser an einer unten im Wasserkanal gelegenen Klemmschiene 14 gehalten. Ähnlich sind die Verhältnisse im hinteren Abschnitt des Rahmenteils 10, von dem ein in Fahrzeugquermitte gelegener Schnitt in Fig. 5 dargestellt ist.

Zusätzlich ist es möglich (hier nicht gezeichnet), dass den beiden Aufstellmechanismen Verlagerungseinheiten für ein Verschieben des aufgestellten Sonnendachteils 6 über einen nach hinten anschließenden Dachbereich zugeordnet sind. Damit würde das Sonnendachteil 6 dann auch zum Schiebedach. Solche Verlagerungseinheiten können zum Beispiel teleskopartig gegeneinander verschiebbare Abschnitte umfassen und daher in eingefahrener Stellung kurz und raumsparend in den seitlichen Wasserkanälen des Rahmenteils 10 untergebracht sein.

Der bereits oben beschriebene Querträger 12 kann in Doppelfunktion auch zur Aufnahme eines Rollos 15 oder einer ähnlichen Abschattungseinheit dienen. Hierfür kann auch ein weiterer oder anderer Querträger vorgesehen sein, insbesondere wenn der zusammen mit dem Rahmenteil 10 die Baueinheit 4 bildende Querträger 12 nicht vorhanden ist. Im Ausführungsbeispiel ist das Rollo 15 etwas hinter dem Querträger 12 gehalten und entgegen der Fahrtrichtung F nach hinten ausziehbar. Dies kann manuell oder über einen zum Beispiel elektrischen Antrieb erfolgen.

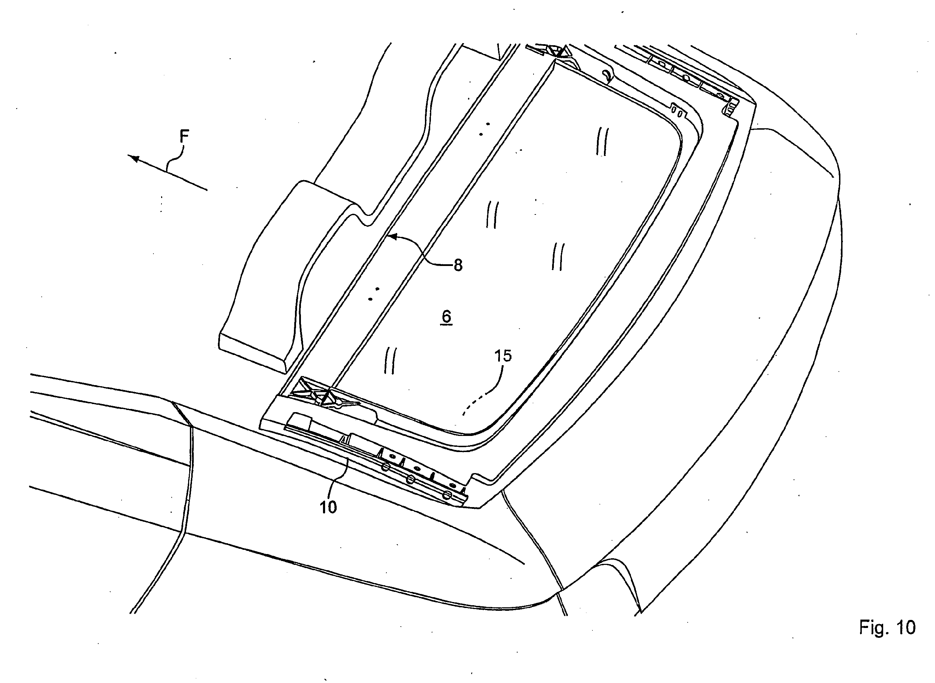

Besonders günstig ist das Rollo 15 bei Dachöffnung automatisiert ausfahrbar, wodurch es in der geöffneten Stellung derart unter dem Sonnendachteil 6 gelegen ist, dass die Sicht durch dieses auf darunter gelegene Teile des Daches und/oder der Dachmechanik verhindert ist (Fig. 10).

Das Sonnendachteil 6 selbst kann zum Beispiel einstückig sein und vollständig oder bei einer mehrteiligen Ausbildung zumindest im wesentlichen aus einem leichten und bruchfesten Material, etwa Polycarbonat, bestehen.

## Patentansprüche

1. Cabriolet-Fahrzeug (1) mit einem zumindest teilweise mit einem Bezug (3) versehenen Dach (2), das in seinem vorderen, in geschlossener Stellung einem Windschutzscheibenrahmen (4) zugewandten Bereich eine starre, den Bezug (3) untergreifende Baueinheit (5) umfasst, die ein Rahmenteil (10) für ein aus der Ebene des Dachbezugs aufstellbares Sonnendachteil (6) umfasst,
**dadurch gekennzeichnet,**
**dass** für das Sonnendachteil (6) eine nach vorne offene Ausnehmung im Dachbezug (3) ausgebildet ist.

2. Cabriolet-Fahrzeug nach Anspruch 1,
**dadurch gekennzeichnet,**
**dass** das Sonnendachteil (6) mit seiner Vorderkante (8) einen Teil der vorderen Dachkante ausbildet.

3. Cabriolet-Fahrzeug nach einem der Ansprüche 1 oder 2,
**dadurch gekennzeichnet,**
**dass** die Baueinheit (5) einen das Sonnendachteil (6) seitlich und hinten untergreifenden und hier mit einem Wasserkanal versehenen Rahmenteil (10) für das Sonnendachteil ausbildet.

4. Cabriolet-Fahrzeug nach Anspruch 3,
**dadurch gekennzeichnet,**
**dass** die Baueinheit (5) einen gegenüber den seitlichen und hinteren Abschnitten des Rahmenteils (10) abgesenkten vorderen Querträger (12) umfasst.

5. Cabriolet-Fahrzeug nach einem der Ansprüche 3 oder 4,
**dadurch gekennzeichnet,**
**dass** die Baueinheit (4) einstückig ausgebildet ist.

6. Cabriolet-Fahrzeug nach einem der Ansprüche 3 bis 5,
**dadurch gekennzeichnet,**
**dass** in den seitlichen Abschnitten des Rahmenteils (10) Aufstellmechanismen (13) für das Sonnendachteil (6) angeordnet sind.

7. Cabriolet-Fahrzeug nach einem der Ansprüche 1 bis 6,
**dadurch gekennzeichnet,**
**dass** den Aufstellmechanismen (13) Verlagerungseinheiten für ein Verschieben des aufgestellten Sonnendachteils (6) über einen nach hinten anschließenden Dachbereich zugeordnet sind.

8. Cabriolet-Fahrzeug nach einem der Ansprüche 1 bis 7,
**dadurch gekennzeichnet,**
**dass** das Sonnendachteil (6) bei geschlossenem Dach (2) unmittelbar an die Windschutzscheibe (9) anschließt.

9. Cabriolet-Fahrzeug nach einem der Ansprüche 1 bis 8,
**dadurch gekennzeichnet,**
**dass** seitliche, mit Bezug (3) versehene Längseinfasrungen (7) der Ausnehmung bis zur vorderen Dachkante (8) reichen,

10. Cabriolet-Fahrzeug nach einem der Ansprüche 1 bis 9,
**dadurch gekennzeichnet,**
**dass** dem Sonnendachteil (6) ein Querträger zur Aufnahme eines Rollos (15) oder einer ähnlichen Abschattungseinheit zugeordnet ist.

11. Cabriolet-Fahrzeug nach Anspruch 10,
**dadurch gekennzeichnet,**
**dass** das Rollo (15) bei Dachöffnung automatisch ausfahrbar ist.

12. Cabriolet-Fahrzeug nach einem der Ansprüche 1 bis 11,
**dadurch gekennzeichnet,**
**dass** das Sonnendachteil zumindest überwiegend aus Polycarbonat gebildet ist.

## Claims

1. A convertible vehicle (1) with a roof (2) that is at least partially provided with a cover (3) and comprises, in its front area facing a windscreen frame (4) in the closed position, a rigid assembly (5) which engages under the cover (3) and comprises a frame part (10) for a sunroof part (6) which can be raised to an upright position out of the plane of the roof cover,
**characterised in that** a recess with an open front is provided in the roof cover (3) for the sunroof part (6).

2. The convertible vehicle according to claim 1, **characterised in that** the sunroof part (6) is with its front edge (8) forming part of the front roof edge.

3. The convertible vehicle according to any one of claims 1 or 2, **characterised in that** the assembly (5) forms a frame part (10) for the sunroof part, engaging the sunroof part (6) laterally and rearwardly from below and provided with a water channel here.

4. The convertible vehicle according to claim 3, **characterised in that** the assembly (5) comprises a front crossmember (12), which is lowered with respect to the side and rear portions of the frame part (10).

5. The convertible vehicle according to any one of claims 3 or 4, **characterised in that** the assembly (4) is one piece.

6. The convertible vehicle according to any one of claims 3 to 5, **characterised in that** raising mechanisms (13) for the sunroof part (6) are arranged in the side portions of the frame part (10).

7. The convertible vehicle according to any one of claims 1 to 6, **characterised in that** displacement units for displacing the raised sunroof part (6) over a rearward adjoining roof area are assigned to the raising mechanisms (13).

8. The convertible vehicle according to any one of claims 1 to 7, **characterised in that** the sunroof part (6) directly adjoins the windscreen (9) when the roof (2) is closed.

9. The convertible vehicle according to any one of claims 1 to 8, **characterised in that** lateral, longitudinal borders (7) of the recess, which are provided with the cover (3), extend to the front edge (8) of the roof.

10. The convertible vehicle according to any one of claims 1 to 9, **characterised in that** a crossmember receiving a sunblind (15) or a similar shading unit is assigned to the sunroof part (6).

11. The convertible vehicle according to claim 10, **characterised in that** the sunblind (15) is automatically extendable when the roof opens.

12. The convertible vehicle according to any one of claims 1 to 11, **characterised in that** the sunroof part is formed at least mainly from polycarbonate.

## Revendications

1. Véhicule cabriolet (1), comprenant un toit (2) qui présente au moins partiellement un revêtement (3) et comprend, dans sa région avant tournée vers un cadre de pare-brise (4) en position fermée, un ensemble rigide (5) venant en prise par le dessous avec le revêtement (3) et comprenant un élément de cadre (10) pour un élément de toit ouvrant (6) qui peut être élevé du plan du revêtement de toit,
**caractérisé en ce qu'**un évidement ouvert vers l'avant est réalisé dans le revêtement de toit (3) pour l'élément de toit ouvrant (6).

2. Véhicule cabriolet selon la revendication 1, **caractérisé en ce que** l'élément de toit ouvrant (6) présente un bord avant (8) faisant partie du bord avant du toit.

3. Véhicule cabriolet selon l'une quelconque des revendications 1 ou 2, **caractérisé en ce que** l'ensemble (5) constitue un élément de cadre (10) pour l'élément de toit ouvrant, venant en prise par le dessous avec les bords latéraux et arrière de l'élément de toit ouvrant (6) et présentant ici un canal à eau.

4. Véhicule cabriolet selon la revendication 3, **caractérisé en ce que** l'ensemble (5) comprend une traverse avant (12), qui est abaissée par rapport aux sections latérales et arrière de l'élément de cadre (10).

5. Véhicule cabriolet selon l'une quelconque des revendications 3 ou 4, **caractérisé en ce que** l'ensemble (4) est réalisé d'une seule pièce.

6. Véhicule cabriolet selon l'une quelconque des revendications 3 à 5, **caractérisé en ce que** des mécanismes élévateurs (13) pour l'élément de toit ouvrant (6) sont disposés dans les sections latérales de l'élément de cadre (10).

7. Véhicule cabriolet selon l'une quelconque des revendications 1 à 6, **caractérisé en ce que** des unités de déplacement, qui sont destinées à déplacer l'élément de toit ouvrant (6) élevé sur une région de toit contiguë vers l'arrière, sont associées aux mécanismes élévateurs (13).

8. Véhicule cabriolet selon l'une quelconque des revendications 1 à 7, **caractérisé en ce que** l'élément de toit ouvrant (6) est directement contigu au pare-brise (9) lorsque le toit (2) est fermé.

9. Véhicule cabriolet selon l'une quelconque des revendications 1 à 8, **caractérisé en ce que** des rebords longitudinaux latéraux (7) de l'évidement, qui présentent un revêtement (3), s'étendent jusqu'au bord avant (8) du toit.

10. Véhicule cabriolet selon l'une quelconque des revendications 1 à 9, **caractérisé en ce qu'**une traverse, recevant un store pare-soleil (15) ou un dispositif d'ombrage similaire, est conjuguée à l'élément de toit ouvrant (6).

11. Véhicule cabriolet selon la revendication 10, **caractérisé en ce que** le store pare-soleil (15) est automatiquement extensible lors de l'ouverture du toit.

12. Véhicule cabriolet selon l'une quelconque des revendications 1 à 11, **caractérisé en ce que** l'élément de toit ouvrant est réalisé, au moins pour la plupart, en polycarbonate.
